(19) **Europäisches Patentamt**

**European Patent Office**

**Office européen des brevets**

(11) Veröffentlichungsnummer: **0 232 705 B1**

(12) **EUROPÄISCHE PATENTSCHRIFT**

(45) Veröffentlichungstag der Patentschrift: **15.07.92**

(51) Int. Cl.5: **G06F 9/00**, H05K 5/00, G06K 19/077

(21) Anmeldenummer: **87100090.7**

(22) Anmeldetag: **07.01.87**

(54) **Elektronische Datenträger und Verfahren zu seiner Herstellung.**

(30) Priorität: **10.01.86 DE 3600470**

(43) Veröffentlichungstag der Anmeldung:
**19.08.87 Patentblatt 87/34**

(45) Bekanntmachung des Hinweises auf die
Patenterteilung:
**15.07.92 Patentblatt 92/29**

(84) Benannte Vertragsstaaten:
**AT BE CH DE ES FR GB GR IT LI LU NL SE**

(56) Entgegenhaltungen:
**EP-A- 0 107 061**
**DE-A- 3 248 385**
**FR-A- 2 337 381**
**GB-A- 2 096 541**

(73) Patentinhaber: **Orga-Druck GmbH**
**Otto Hahn Strasse 50**
**W-6072 Dreieich(DE)**

(72) Erfinder: **Rübsam, Helmut**
**Hauptstrasse 48**
**W-6056 Heusenstamm(DE)**

(74) Vertreter: **Linser, Heinz**
**Patentanwälte Heinz Linser Dipl. Ing. Eckhardt Eyer Robert-Bosch-Strasse 12a Postfach 10 22 10**
**W-6072 Dreieich(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft ein Verfahren zur Herstellung eines Befestigungselements für mindestens einen elektronischen Baustein mit integrierter Schaltung, welches mit einem als eine Karte ausgebildeten Trägerelement einen homogenen Verbund bildet und dessen elektrische Kontakte von dem Trägerelement direkt oder indirekt abgreifbar sind sowie den durch dieses Verfahren hergestellten Datenträger.

Im Geschäftsverkehr sind beispielsweise bereits seit langem sogenannte Scheckkarten bekannt, welche nicht nur optisch lesbare und mechanisch abgreifbare Daten aufweisen, sondern die auch zugleich mit Datenträgern in Form magnetischer Stoffe versehen sind. Mit Hilfe entsprechender Schreib- und Lesegeräte werden einem solchen Magnetstreifen Daten aufgetragen, welche von einem Lesegerät aufgenommen, verarbeitet und in entsprechende Funktionen umgesetzt werden.

Datenträger dieser Art werden beispielsweise in Parkhäusern eingesetzt. Bei der Einfahrt in ein Parkhaus zieht der Kunde aus einem Automaten eine Karte mit Magnetstreifen, dem die jeweilige Uhrzeit eingeschrieben wird. Bei der Abholung des geparkten Fahrzeugs liest ein weiterer Automat den Magnetstreifen, berechnet die Parkzeit und fügt Quittierungsdaten hinzu, welche die Schranke des Parkhauses über einen weiteren Leseautomaten dann freigeben, wenn die Quittierungsdaten zur Zeit der Betätigung des Schrankenautomaten in einer vorbestimmten Toleranzzeit liegen.

Magnetstreifen lassen sich zwar einfach und preiswert herstellen, jedoch sind diese gegen mechanische Einwirkungen sehr empfindlich. So führt ein Knicken der Karte oder ein Zerkratzen des Magnetstreifens bereits zur Löschung oder Zerstörung magnetisch gespeicherter Daten. Magnetstreifen, welche sich auf Karten der genannten Art befinden, sind frei zugängig und können somit auch in unbefugter Weise mit Hilfe entsprechender Geräte gelesen und gefälscht werden.

Dies ist insbesondere bei Scheckkarten kritisch, da durch solche Manipulationen erhebliche Schäden auftreten können.

Um derartig gespeicherte Daten in ausreichender Weise zu sichern, ist es erforderlich, diese zu verschlüsseln, wodurch die Datenkapazität des Trägers erhöht werden muß, welche jedoch auf einer Scheckkarte dann nicht mehr ausreichend ist.

Zur Erhöhung der Datenkapazität einer Karte dieser Art ist es auch bereits aus EP-A-0 107 061 bekannt, elektronische Bausteine mit einer integrierten Schaltung zu verwenden. Ein elektronischer Baustein wird hierbei in eine Öffnung oder eine Nut einer Karte eingesetzt und seine elektrischen Kontakte lassen sich durch entsprechende Schleifkontakte eines Automaten abgreifen. Der große Vorteil besteht darin, daß nunmehr eine ausreichende Datenkapazität zur Verfügung steht, so daß eine Datensicherung eines relativ großen Datenspeichers möglich ist.

Bei den bekannten Karten, welche einen elektronischen Baustein aufweisen, besteht noch der Nachteil, daß die Bausteine oder ihre elektrischen Kontakte leicht beschädigt oder sogar aus der Karte herausgedrückt werden können. Dies kann bereits unbeabsichtigt dadurch erfolgen, daß die Karte unvorschriftsmäßig gelagert oder transportiert wird.

Der vorliegenden Erfindung liegt daher die Aufgabe zugrunde, einen elektronischen Datenträger in Form eines elektronischen Bausteins mit integrierter Schaltung mit einem Trägerelement, beispielsweise einer Karte, in einfacher Weise homogen und integral zu verbinden, derart, daß eine Entfernung des Datenträgers ohne Zerstörung der Karte ausgeschlossen ist.

Die Lösung dieser Aufgabe erfolgt bei dem eingangs aufgeführten Verfahren durch die Kombination der Merkmale a - g, nämlich derart, daß

a. ein Bogen einer Kunststoffolie beidseitig metallisiert und an vorbestimmten Stellen einer vorgesehenen Kontaktflächenordnung mit einer Vielzahl Bohrungen versehen und zur elektrischen Verbindung beider Seiten durchkontaktiert wird;

b. auf beiden Seiten der metallisierten Kunststoffolie eine Vielzahl sich gegenüberliegender Ätzbilder, entsprechend dem jeweils einzufügenden elektronischen Baustein, hergestellt, und die Ätzbilder auf dem Folienbogen in sich anschließenden Prozessen mit Kontaktmaterial veredelt werden,

c. der um die veredelte Kontaktflächenanordnung verlaufende Rand um geringfügig mehr als die Höhe des einzufügenden elektronischen Bausteins zu einem die Schenkel aufweisenden Lagerbett mit einem noch verbleibenden ringsumverlaufenden Befestigungsrand ausgeformt wird,

d. der elektronische Baustein in dieses gebildete Bett eingefügt und mit seinen elektrischen Kontakten mit den dafür vorbereiteten Kontakten der Kontaktflächenanordnung elektrisch verbunden wird,

e. der noch verbleibende Raum zwischen dem elektronischen Baustein und den Schenkeln des Lagerbettes bis zur Höhe des Befestigungsrandes des Lagerbettes mit Füllmasse ausgefüllt wird,

f. die auf dem Bogen der Kunststoffolie gebildeten Befestigungselemente mit ihren Lagerbetten mit ihrem ringsumverlaufenden Befestigungsrand zur weiteren Befestigung mit Trägerelementen aus der Kunststoffolie herausgetrennt werden, und

g. eine Kernfolie aus Kunststoff, Pappe oder Hartpappe mit mindestens einer Aussparung in der äußeren Form eines entsprechenden Lagerbettes zur Aufnahme eines oder mehrerer elektronischer Bausteine in ihrem jeweiligen Befestigungselement versehen werden, und die Befestigungselemente in die jeweilige Aussparung eingesetzt und mit der Umrandung derselben so befestigt werden, daß der Befestigungsrand des Lagerbettes auf der Kernfolie liegt.

Nach Durchführung dieses Verfahrens liegen eine Vielzahl veredelter Kontaktflächenanordnungen vor, welche jeweils die Grundform eines entsprechenden elektronischen Bausteins aufweisen, wobei darüberhinausgehend ein ausreichender Befestigungsrand vorhanden ist.

Für die Weiterverarbeitung ist es vorteilhaft, den Befestigungsrand eines jeden Befestigungselements mit einer Vielzahl von Bohrungen zu versehen.

In einer Abwandlung des Verfahrens nach der Erfindung wird auf den um die veredelte Kontaktflächenanordnung verlaufenden Befestigungsrand ein Schutzring befestigt, welcher geringfügig höher als die Höhe des einzufügenden elektronischen Bausteins ist.

Zur weiteren Einbettung des Befestigungselements und Verbindung mit der Kernfolie wird diese auf ihrer kontaktfreien Seite mit einer durchgehenden Abdeckfolie beschichtet. Aus den gleichen Gründen wird die Kernfolie auf der Seite, auf der sich die Kontakte oder Zuleitungen der elektronischen Bausteine befinden, mit einer entsprechend der Größe dieser abtastbaren Kontakte ausgesparten Teilen versehenen Überzugsfolie beschichtet.

Die andere Seite der Kernfolie oder die darauf befindliche Abdeckfolie wird mit einer durchgehenden Überzugsfolie beschichtet, welche auch mit optisch lesbaren Daten bedruckt sein kann.

Weiter ist es vorteilhaft, die Kernfolie auf ihrer kontakfreien Seite mit einer Zwischenfolie zu beschichten, welche Aussparungen in der Größe des Befestigungsrandes jeweils eines Lagerbettes aufweist. Auf diese Weise wird jeder Übergang von der Kernfolie zum Befestigungrand des Befestigungselements ausgeglichen, so daß die Karte vollkommen homogen ist und die Lage des elektronischen Elementes nicht fühlbar ist.

In einer vorteilhaften Ausführungsform der Erfindung weist das Ätzbild Kontakt- und/oder Befestigungsarme auf, so daß nach den galvanischen Bädern diese Befestigungsarme aus Metall vorliegen, welche sich über den Befestigungsrand des gebildeten Lagerbettes erstrecken. Hierdurch erfolgt eine zusätzliche Verankerung mit der Kernfolie. Gleichzeitig können diese Befestigungsarme auch als elektrisch leitende Verbindungen genutzt werden, um beispielsweise Verdrahtungen mit weiteren elektronischen Bauelementen in der Karte herzustellen.

Die Erfindung enthält außerdem den Datenträger gemäß Anspruch 8.

Die Erfindung wird anhand der Zeichnungen näher erläutert. Hierbei zeigen:

FIGUR 1    einen Querschnitt durch einen elektronischen Datenträger, beinhaltend einen verankerten elektronischen Baustein in vergrößerter Darstellung;

FIGUR 2    einen Querschnitt durch einen elektronischen Datenträger nach einer weiteren Ausführungsform mit einem verankerten elektronischen Baustein in vergrößerter Darstellung, und

FIGUR 3    eine Draufsicht auf die Kontaktierungsseite einer Karte mit mehreren eingebauten elektronischen Bausteinen, in geringfügig vergrößerter Form.

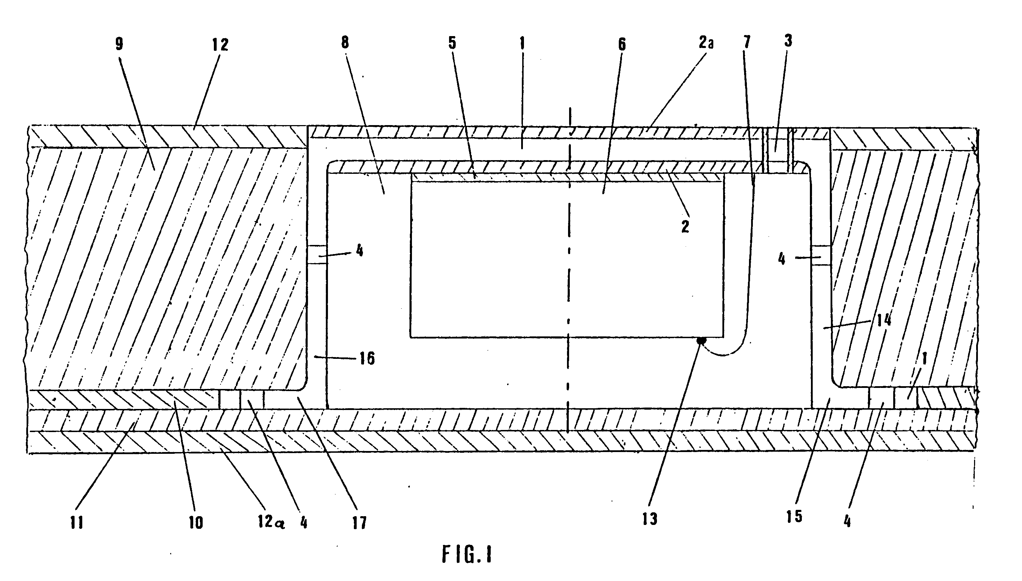

Aus der Figur 1 ist ein Querschnitt durch einen fertiggestellten elektronischen Datenträger nach der Erfindung zu entnehmen. Ein elektronischer Baustein mit einer integrierten Schaltung 6 ist auf einer inneren Leiterbahn 2 befestigt, beispielsweise durch Kleben. Die Leiterbahn 2 befindet sich auf einer Kunststoffolie 1, welche mit ihren Schenkeln 16 und den Befestigungsrändern 15 und 17 für den Baustein 6 ein Bett bildet, durch das der Baustein geschützt gelagert ist. Der inneren Leiterbahn 2 liegt eine äußere Leiterbahn 2a gegenüber, welche Kontaktflächen aufweist. Die innere und die äußere Leiterbahn 2 bzw. 2a sind miteinander durch eine Bohrung 3 verbunden, welche an ihren Bohrungsrändern metallisiert ist, so daß zwischen den beiden Leiterflächen ein elektrischer Kontakt besteht. Die Schenkel 16 der Kunststoffolie 1 sind mit einer Kernfolie 9 durch verschiedene Maßnahmen und Mittel verbunden. Die Schenkel 16 und die Befestigungsränder 15 und 17 sind mit Bohrungen 4 versehen. Beim Verbinden der Kernfolie 9 mit den genannten Schenkeln und Befestigungsrändern dringt der Kunststoff in die Bohrungen ein, erhärtet dort und bildet auf diese Weise eine innige Befestigung, ähnlich einer Nagelung oder Vernietung.

Der Raum 8 zwischen dem elektronischen Baustein 6 und den Schenkeln 16 ist nach Fertigstellung der elektrischen Verbindung zwischen dem Baustein und der inneren Leiterplatte 2 über den Leiter 7 mit einer Vergußmasse, wie beispielsweise Gießharz, vergossen. Damit ist nicht nur der elektrische Leiter 7 sicher gegen mechanische Beeinträchtigungen geschützt, sondern der gesamte Baustein.

Den Befestigungsrändern 15 und 17 schließt sich eine Zwischenfolie in gleicher Stärke an, so daß diese Ränder ausgeglichen werden und keine Unebenheiten auf der Karte fühlbar auftreten. Auf der unteren, kontaktfreien Seite der Karte ist eine durchgehende Abdeckfolie 11 aufgetragen, welche mit optisch lesbaren Informationen bedruckt sein kann. Auf dieser befindet sich eine ebenfalls durchgehende Überzugsfolie 12a.

Eine solche Folie ist auch auf der gegenüberliegenden Seite der Karte aufgetragen, welche jedoch Aussparungen für die Leiterbahn 2a aufweist, so daß Schleifkontakte oder dergleichen die im Baustein 6 elektronisch gespeicherten Informationen gemäß einem vorgegebenen Programmablauf abgreifen können.

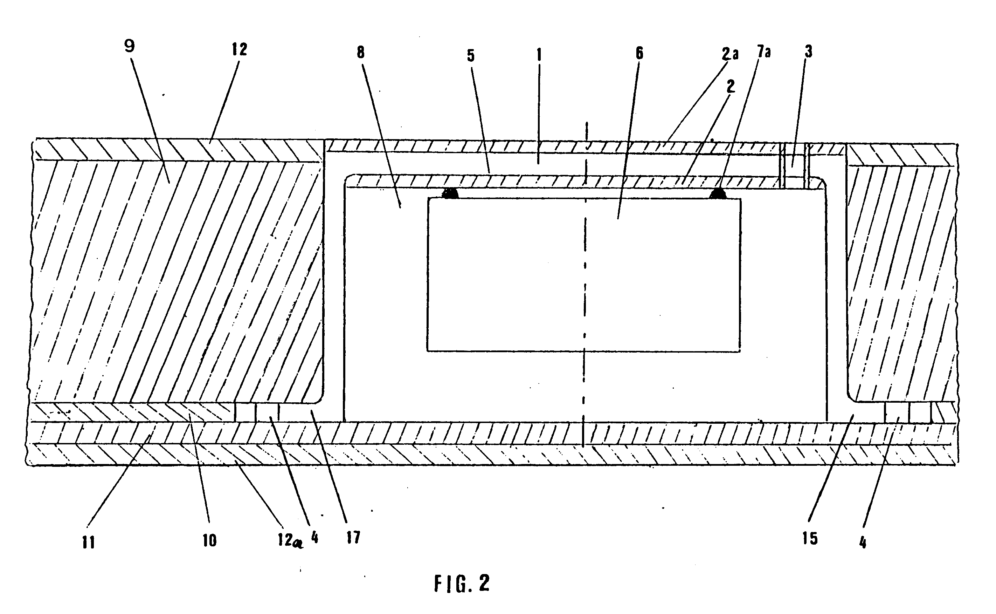

Die Figur 2 zeigt eine weitere Ausführungsform der Erfindung. Hierbei sind gleiche Elemente mit gleichen Bezugzeichen bezeichnet.

Der Baustein 6 ist mit Kontaktstellen 7a versehen, welche mit dem inneren Leiter 2 der Folie 1 direkt verbunden, beispielsweise verlötet sind. Eine solche Ausführungsform vereinfacht nicht nur den Herstellungsprozeß sehr wesentlich, sondern verbessert auch die Sicherheit und Funktion des Daten- und Programmträgers, da keine langen Leiterwege vorhanden sind.

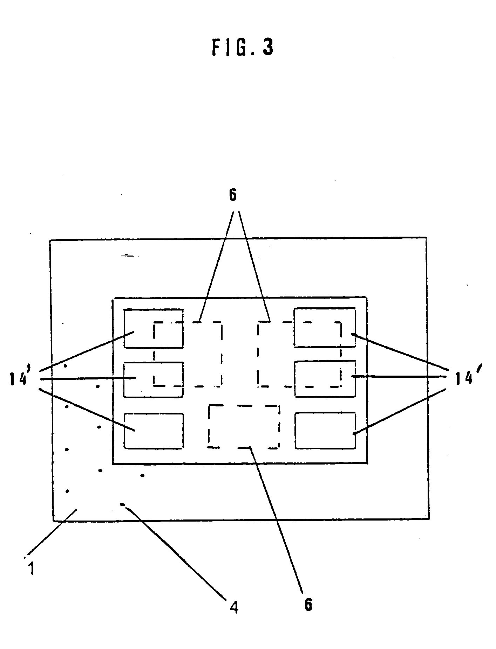

Die Figur 3 zeigt eine Draufsicht auf eine Karte mit mehreren elektronischen Bausteinen 6, welche unter den Kontaktflächen 14' liegen und mit diesen elektrisch verbunden sind, beispielsweise wie in der Ausbildung nach Figur 1 oder 2.

Mit der Datenkarte nach der Erfindung liegt ein Datenträger für eine große Datenmenge vor, bei der elektronische Bausteine mit integrierter Schaltung in einem homogenen Verbund mit einer Kernfolie und weiteren Schutzfolien angeordnet sind. Dieser in Form einer Karte ausgebildete Datenträger ist nicht größer und auch nicht dicker als die bekannten Scheck- oder Automatenkarten, enthält jedoch um einige Zehnerpotenzen mehr Datenmengen, so daß eine aufwendige und damit sichere Verschlüsselung der Daten möglich ist. Darüber hinaus ist der widerrechtliche Zugriff auf die Daten oder die Zerstörung derselben nur unter Zerstörung der gesamten Karte möglich.

Der elektronische Baustein mit seinem Befestigungsrand läßt sich auch in andere Konfigurationen als eine Karte einbauen, beispielsweise in einen entsprechend preparierten Schlüssel oder einen Stift, ähnlich einem Kugelschreiber. Diese Elemente können mit einem Sicherheitscode programmiert sein und können damit Schlüsselfunktionen ausüben.

**Patentansprüche**

1. Verfahren zur Herstellung eines Befestigungselements für mindestens einen elektronischen Baustein mit integrierter Schaltung, welches mit einem als eine Karte ausgebildeten Trägerelement einen homogenen Verbund bildet und dessen elektrische Kontakte von dem Trägerelement direkt oder indirekt abgreifbar sind, **gekennzeichnet durch** folgende Verfahrensschritte:

a. ein Bogen einer Kunststoffolie (1) wird beidseitig metallisiert (2, 2a) und an vorbestimmten Stellen einer vorgesehenen Kontaktflächenordnung mit einer Vielzahl von Bohrungen (3) versehen und zur elektrischen Verbindung beider Seiten durchkontaktiert;

b. auf beiden Seiten der metallisierten Kunststoffolie (1) werden eine Vielzahl sich gegenüberliegender Ätzbilder, entsprechend dem jeweils einzufügenden elektronischen Baustein (6), hergestellt, und die Ätzbilder auf dem Folienbogen werden in sich anschließenden Prozessen mit Kontaktmaterial veredelt,

c. der um die veredelte Kontaktflächenanordnung verlaufende Rand wird um geringfügig mehr als die Höhe des einzufügenden elektronischen Bausteins zu einem die Schenkel (14, 16) aufweisenden Lagerbett mit einem noch verbleibenden ringumsverlaufenden Befestigungsrand (15,17) ausgeformt,

d. der elektronische Baustein (6) wird in dieses gebildete Bett eingefügt und mit seinen elektrischen Kontakten mit den dafür vorbereiteten Kontakten der Kontaktflächenanordnung (14) elektrisch verbunden,

e. der noch verbleibende Raum zwischen dem elektronischen Baustein (6) und den Schenkeln (16) des Lagerbettes wird bis zur Höhe des Befestigungsrandes (15,17) des Lagerbettes mit Füllmasse ausgefüllt,

f. die auf dem Bogen der Kunststoffolie (1) gebildeten Befestigungselemente mit ihren Lagerbetten werden mit ihrem ringsumverlaufenden Befestigungsrand zur weiteren Befestigung mit Trägerelementen aus der Kunststoffolie herausgetrennt, und

g. eine Kernfolie (9) aus Kunststoff, Pappe oder Hartpappe wird mit mindestens einer Aussparung in der äußeren Form eines entsprechenden Lagerbettes zur Aufnahme eines oder mehrerer elektronischer Bausteine (6) in ihrem jeweiligen Befestigungselement versehen, und die Befestigungselemente werden in die jeweilige Aussparung eingesetzt und mit der Umrandung derselben befestigt, wobei der Befestigungsrand (15,17) des Lagerbettes auf der Kernfolie (9) liegt.

2. Verfahren nach Anspruch 1, **dadurch gekennzeichnet,** daß der Befestigungsrand (15,17) eines jeden Befestigungselements mit einer Vielzahl von Bohrungen (4) versehen wird.

3. Verfahren nach Anspruch 1, **dadurch gekennzeichnet,** daß auf den um die veredelte Kontaktflächenanordnung verlaufenden Rand ein Schutzring befestigt wird, welcher geringfügig höher als die Höhe des einzufügenden elektronischen Bausteins (6) ist.

4. Verfahren nach Anspruch 1, oder einem der voranstehenden Ansprüche, **dadurch gekennzeichnet,** daß die Kernfolie (9) auf ihrer kontaktfreien Seite mit einer Abdeckfolie (11) beschichtet wird.

5. Verfahren nach Anspruch 4, **dadurch gekennzeichnet,** daß die Kernfolie (9) auf der Seite, auf der sich die Kontakte oder Zuleitungen des oder der elektronischen Bausteine (6) befinden, mit einer entsprechend der Größe dieser abtastbaren Kontakte ausgesparten Überzugsfolie (12) beschichtet wird und daß die andere Seite der Kernfolie oder die darauf befindliche Abdeckfolie mit einer Überzugsfolie (12a) beschichtet wird.

6. Verfahren nach Anspruch 1, oder einem der voranstehenden Ansprüche, **dadurch gekennzeichnet,** daß die Kernfolie (9) auf ihrer kontaktfreien Seite mit einer Zwischenfolie (10) beschichtet wird, welche Aussparungen in der Größe des Befestigungsrandes (15,17) jeweils eines Lagerbettes aufweist.

7. Verfahren nach Anspruch 1, oder einem der voranstehenden Ansprüche, **dadurch gekennzeichnet,** daß das Ätzbild Kontakt- und/oder Befestigungsarme aufweist, welche sich über den Befestigungsrand (15,17) des gebildeten Lagerbettes erstrecken.

8. Elektronischer Datenträger, welcher als Trägerelement in Form einer Karte ausgebildet ist und mit mindestens einem Befestigungselement, welches mindestens einen elektronischen Baustein aufweist, einen homogenen Verbund bildet, dessen elektrische Kontakte von dem Datenträger direkt oder indirekt abgreifbar sind, **dadurch gekennzeichnet,** daß bei genanntem Befestigungselement mindestens ein elektronischer Baustein (6) an einer mindestens teilweise und beidseitig metallisch beschichteten Trägerfolie (1) befestigt ist, welche an ihren Rändern die Seitenflächen des Bausteins umschließende Schenkel (14,16) aufweist, daß die für den Baustein ein Lagerbett bildenden Schenkel (14,16) an ihren Enden zur Auflage auf eine das Trägerelement bildende Kernfolie (9) umgebördelt sind und somit einen Rand (15,17) bilden, daß der Raum (8) zwischen dem elektronischen Baustein und der Innenseite der Schutzfläche mit einer Füllmasse ausgefüllt ist, daß die Befestigungselemente in Aussparungen der Kernfolie (9) in der äußeren Form eines entsprechenden Lagerbettes des jeweiligen Befestigungselementes eingefügt sind, wobei der Befestigungsrand (15,17) des Lagerbettes auf der Kernfolie (9) aufliegt.

9. Elektronischer Datenträger nach Anspruch 8, **dadurch gekennzeichnet,** daß jeder elektronische Baustein (6) oder eine Gruppe derselben von einer als Schenkel des Lagerbettes ausgebildeten Schutzfläche umgeben ist, welche von der Trägerfolie (1) gebildet ist.

10. Elektronischer Datenträger nach Anspruch 8 oder 9, **dadurch gekennzeichnet,** daß die Trägerfolie (1) auf ihrer Innen- und Außenseite in mehreren Lagen mit unterschiedlichen Metallen beschichtet ist und daß diese Schichten (2,2a) untereinander elektrisch verbunden sind.

11. Elektronischer Datenträger nach Anspruch 8, 9 oder 10, **dadurch gekennzeichnet,** daß die Schutzflächen (Schenkel 16) Bohrungen (4) und Verankerungselemente aufweisen.

12. Elektronischer Datenträger nach Anspruch 8, 9, 10 oder 11, **dadurch gekennzeichnet,** daß die mit der elektronische Bausteine tragende Trägerfolie verbundene Kernfolie (9) von einer Überzugsfolie (12,12a) abgedeckt ist, wobei auf der Seite der Kernfolie (9), auf der sich die elektrischen Kontakte des elektronischen Bausteins (6) befinden, die aufgetragene Überzugsfolie (12) entsprechende Aussparungen aufweist, während die auf der kontaktfreien Seite befindliche Überzugsfolie (12a) durchgehend ausgebildet ist.

**Claims**

1. Method of producing a fastening element for at least one electronic component with an integrated circuit, which together with a carrier element having the form of a card forms a homogeneous composite, and the electrical contacts of which can be scanned directly or indirectly from the carrier element, characterized by the following steps:

a. metallizing (2, 2a) both sides of a plastics sheet (1) and providing a plurality of bores (3) at predetermined positions of a pre-designed contact surface and through-plating said sheet for electrical connection on both sides;

b. producing on both sides of the metallized plastics sheet (1) a plurality of oppositely arranged etching images corresponding to the electronic component (6) to be inserted in each case, and refining the etching images on the sheet in subsequent processes by means of contacting material;

c. modelling the edge around the refined contacting surface by an amount slightly greater than the height of the electronic component to be inserted to form the base having the legs (14, 16) such that a residual peripheral fastening border (15, 17) remains;

d. inserting the electronic component (6) into this base and electrically connecting it with its electrical contacts by means of the contacts on the contacting surface (14), which were prepared for this purpose;

e. filling the remaining space between the electronic component (6) and the legs (16) of the base up to the level of the fastening border (15, 17) of the base with a filling material;

f. cutting out of the plastics sheet the fastening elements formed on the plastics sheet (1) together with their bases and with the peripheral fastening border for subsequent fastening to the carrier element; and

g. providing a ground sheet (9) of plastics, cardboard or hardboard with at least one recess in the outer shape of a corresponding base for accomodating one or several electronic components (6) in their respective fastening element, inserting the fastening elements in the respective recess and fastening the same to the border, with the fastening border (15, 17) of the base lying on the ground sheet (9).

2.  Method according to Claim 1, characterized in that the fastening border (15, 17) of each fastening element is provided with a plurality of bores (4).

3.  Method according to Claim 1, characterized in that a securing ring is fixed to the border surrounding the refined contacting surface, said securing ring being slightly higher than the height of the electronic component (6) to be inserted.

4.  Method according to Claim 1 or any one of the preceding claims, characterized in that the ground sheet (9) is coated on its contact-free side with a covering sheet (11).

5.  Method according to Claim 4, characterized in that the ground sheet (9) is covered on the side, where the contacts or the supply lines of the electronic component(s) (6) are located, with a cover sheet (12) having recesses corresponding to the size of the contacts to be scanned, and in that the other side of the ground sheet or the cover sheet fixed thereto is covered with a cover sheet (12a).

6.  Method according to Claim 1 or any one of the preceding claims, characterized in that the ground sheet (9) is covered on its contact-free side with an intermediate sheet (10) with recesses having the size of the fastening border (15, 17) of each of the bases.

7.  Method according to Claim 1 or any one of the preceding claims, characterized in that the etching image has contacting and/or fastening arms extending across the fastening border (15, 17) of the formed base.

8.  Electronic data carrier shaped as a carrier element in the form of a card, which, together with at least one fastening element having at least one electronic component, forms a homogeneous composite, the electrical contacts of which can be scanned directly or indirectly from the data carrier, characterized in that on said fastening element at least one electronic component (6) is fixed on a carrier sheet (1) covered at least partially and on both sides with a metallizing coating, said carrier sheet (1) having on its borders legs (14, 16) surrounding the side surfaces of the component;

that the legs (14, 16) forming a base for the component are flanged at their ends to rest on a ground sheet (9) forming the carrier element thus forming a border (15, 17);

that the space (8) between the electronic component and the inside of the protective surface is filled with a filling material;

that the fastening elements are inserted in recesses of the ground sheet (9) in the outer shape of a corresponding bases of the respective fastening element, with the fastening border (15, 17) of the base resting on the ground sheet (9).

9. Electronic data carrier according to Claim 8, characterized in that each electronic component (6) or a group thereof is surrounded by a protective surface formed as a leg of the base, said protective surface being formed by the carrier sheet (1).

10. Electronic data carrier according to Claim 8 or 9, characterized in that the carrier sheet (1) is coated on the inside and the outside with several layers of different metals and that these layers (2, 2a) are electrically connected with each other.

11. Electronic data carrier according to Claim 8, 9 or 10, characterized in that the protective surfaces (leg 16) have bores (4) and anchoring elements.

12. Electronic data carrier according to Claim 8, 9, 10 or 11, characterized in that the ground sheet (9) connected with the carrier sheet carrying electronic components is covered by a cover sheet (12, 12a), the cover sheet (12) having corresponding recesses on that side of the ground sheet (9) where the electronic contacts of the electronic component (6) are, whereas the cover sheet (12a) located on the contact-free side has no such recesses.

**Revendications**

1. Procédé de fabrication d'un élément de fixation pour au moins un module électronique à circuit intégré, qui réalise une liaison homogène avec un élément de support réalisé sous la forme d'une carte, et dont les contacts électriques peuvent être lus de manière directe ou indirecte à partir de l'élément de support, caractérisé par les étapes suivantes:

    a. un profilé (1) en une feuille de matériau synthétique, est métallisé (2, 2a) sur ses deux faces, et est doté en des endroits prédéterminés d'un agencement de surfaces de contact de plusieurs percements (3), et les deux faces sont mises en contact électrique;

    b. sur les deux faces de la feuille de matériau synthétique métallisée (1), plusieurs dessins opposés correspondants au module électronique (6) à insérer sont réalisés par gravure, et les dessins gravés sur la feuille profilée sont enduits d'un matériau de contact au cours des opérations suivantes;

    c. la bordure s'étendant autour de l'agencement des surfaces de contact enduites est façonnée, sur une hauteur un peu plus grande que celle du module électronique à insérer, en un réceptacle présentant les ailes latérales (14, 16), avec une bordure de fixation (15, 17) périphérique permanente;

    d. le module électronique (6) est inséré dans le réceptacle ainsi formé et est relié électriquement par ses contacts électriques aux contacts préparés à cet effet dans l'agencement des surfaces de contact (14);

    e. l'espace restant entre le module électronique (6) et les ailes (16) du réceptacle est rempli d'une pâte de remplissage jusqu'à la hauteur de la bordure de fixation (15, 17) du réceptacle;

    f. les éléments de fixation formés sur le profilé en feuille de matériau synthétique (1), avec leurs réceptacles, sont séparés de la feuille de matériau synthétique avec leur bordure de fixation périphérique, pour une fixation ultérieure sur des éléments porteurs, et

    g. une feuille d'âme (9) en matériau synthétique, carton ou carton dur, est dotée d'au moins une découpe dont la forme extérieure est celle d'un réceptacle correspondant destiné à recevoir un ou plusieurs modules électroniques (6) dans chacun de ses éléments de fixation, et les éléments de fixation sont insérés dans chaque découpe et fixés à leur bordure périphérique, la bordure de fixation (15, 17) du réceptacle étant en contact avec la feuille d'âme (9).

2. Procédé selon la revendication 1, caractérisé en ce que la bordure de fixation (15, 17) de chaque élément de fixation est dotée de plusieurs percements (4).

3. Procédé selon la revendication 1, caractérisé en ce qu'un anneau de protection est fixé sur la bordure entourant l'agencement des surfaces de contact enduites, cet anneau de protection étant légèrement plus haut que la hauteur du module électronique (6) à insérer.

4. Procédé selon la revendication 1, ou selon l'une des revendications précédentes, caractérisé en ce que la feuille d'âme (9) est recouverte d'une feuille de recouvrement (11) sur sa face dépourvue de contacts.

5. Procédé selon la revendication 4, caractérisé en ce que, sur celle de ses faces sur laquelle se trouvent les contacts ou conducteurs du ou des modules électroniques (6), la feuille d'âme (9) est recouverte d'une feuille de recouvrement (12), découpée en fonction des dimensions de ses contacts balayables, et en ce que l'autre face de la feuille d'âme ou la feuille de recouvrement située sur elle est recouverte d'une feuille de recouvrement (12a).

6. Procédé selon la revendication 1 ou l'une des revendications précédentes, caractérisé en ce que, sur sa face dépourvue de contacts, la feuille d'âme (9) est recouverte d'une feuille intermédiaire (10) qui présente des découpes aux dimensions de la bordure de fixation (15, 17) de chaque réceptacle.

7. Procédé selon la revendication 1 ou l'une des revendications précédentes, caractérisé en ce que le dessin gravé présente des bras de contact et/ou de fixation, qui s'étendent à travers la bordure de fixation (15, 17) du réceptacle formé.

8. Support de données électroniques réalisé sous la forme d'une carte et constituant un élément porteur et formant une liaison homogène avec au moins un élément de fixation qui présente au moins un module électronique dont les contacts électriques peuvent être lus de manière directe ou indirecte à partir du support de données, caractérisé en ce que
sur ledit élément de fixation, au moins un module électronique (6) est fixé sur une feuille porteuse (1) au moins partiellement recouverte de métal sur ses deux faces, cette feuille porteuse présentant sur ses bords les ailes latérales (14, 16) entourant les surfaces latérales du module, en ce que les ailes (14, 16) formant un réceptacle pour le module sont rabattues à leurs extrémités pour s'appuyer sur une feuille d'âme (9) formant l'élément porteur, et forment ainsi une bordure (15, 17), en ce que l'espace (8) situé entre le module électronique et la face intérieure des surfaces de protection est rempli d'une pâte de remplissage, en ce que les éléments de fixation sont insérés dans des découpes de la feuille d'âme (9) dont la forme extérieure est celle d'un réceptacle pour chaque élément de fixation, la bordure de fixation (15, 17) du réceptacle reposant sur la feuille d'âme (9).

9. Support de données électroniques selon la revendication 8, caractérisé en ce que chaque module électronique (6) ou un groupe de ceux-ci est entouré d'une surface de protection réalisée sous la forme d'une aile du réceptacle, cette surface de protection étant formée à partir de la feuille porteuse (1).

10. Support de données électroniques selon la revendication 8 ou 9, caractérisé en ce que la feuille porteuse (1) est recouverte de différents métaux en plusieurs couches sur ses faces intérieure et extérieure, et en ce que ces couches (2, 2a) sont électriquement reliées les unes aux autres.

11. Support de données électroniques selon la revendication 8, 9 ou 10, caractérisé en ce que les surfaces de protection (ailes 16) présentent des percements (4) et des éléments d'ancrage.

12. Support de données électroniques selon la revendication 8, 9, 10 ou 11, caractérisé en ce que la feuille d'âme (9) reliée à la feuille porteuse supportant les modules électroniques, est recouverte d'une feuille de recouvrement (12, 12a), la feuille de recouvrement (12) déposée présentant des évidements correspondants, sur la face de la feuille d'âme (9) sur laquelle se trouvent les contacts électriques du module électronique (6), tandis que la feuille de recouvrement (12a) se trouvant sur la face dépourvue de contacts se présente sous une forme continue.

FIG.1

EP 0 232 705 B1

FIG. 2

FIG. 3